(19) Europäisches Patentamt
European Patent Office
Office européen des brevets

(11) **EP 3 712 026 A1**

(12) **EUROPEAN PATENT APPLICATION**
published in accordance with Art. 153(4) EPC

(43) Date of publication:
**23.09.2020 Bulletin 2020/39**

(51) Int Cl.:
**B60W 10/06** (2006.01)   **B60K 6/445** (2007.10)
**B60W 20/00** (2016.01)

(21) Application number: **17931857.1**

(22) Date of filing: **15.11.2017**

(86) International application number:
**PCT/JP2017/041105**

(87) International publication number:
**WO 2019/097606 (23.05.2019 Gazette 2019/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicants:
• **Kabushiki Kaisha Toshiba**
**Minato-ku**
**Tokyo 105-8001 (JP)**
• **Toshiba Infrastructure Systems &**
**Solutions Corporation**
**Kawasaki-shi, Kanagawa 212-8585 (JP)**

(72) Inventors:
• **KUWANO, Yuuki**
**Tokyo 105-8001 (JP)**
• **SHIMIZU, Yosuke**
**Tokyo 105-8001 (JP)**
• **HAGIWARA, Keizo**
**Kawasaki-shi**
**Kanagawa 212-0013 (JP)**

(74) Representative: **AWA Sweden AB**
**Junkersgatan 1**
**582 35 Linköping (SE)**

(54) **VEHICLE**

(57)    A vehicle according to an embodiment is to provide a vehicle with improved power transmission efficiency and includes an internal combustion engine; a power dividing mechanism to divide and output mechanical energy output from the internal combustion engine; a power generator configured to convert the mechanical energy transmitted from the power dividing mechanism into electrical energy; a converter configured to control the power generator; an inverter connected with the converter through a direct-current link; a battery connected with the direct-current link; a motor configured to be driven with energy supplied from the inverter; a power coupling mechanism configured to couple mechanical energy supplied from the motor with the mechanical energy transmitted from the power dividing mechanism; an axle configured to be driven with the mechanical energy coupled with the power coupling mechanism; and a control unit configured to increase a rotation number of the internal combustion engine when a rotation direction of the power generator becomes a minus direction.

F I G. 1

**Description**

FIELD

Embodiments of the present invention relate to a vehicle.

BACKGROUND

Hybrid vehicles including an internal combustion engine and a battery include, for example, a power dividing mechanism distributing mechanical energy output from the internal combustion engine to a power generator side and a drive train side.

For example, a planet gear can be adopted as the power dividing mechanism. The planet gear includes a sun gear, planetary gears circumscribed on the sun gear, a ring gear in which the planetary gears are inscribed, and a planetary carrier rotating along the orbit of the planetary gears. The sun gear transmits motive power to the power generator. The planetary carrier is rotated by motive power of the internal combustion engine. The ring gear transmits motive power to the wheel.

Prior Art Literature

Patent Literature

Patent Literature 1: Japanese Unexamined Patent Application Publication No. 2010-83220

SUMMARY

The vehicle includes a negative mode. In the negative mode, the power generator of the vehicle operates as a motor, that is, the sun gear is rotated reversely, according to the speed and/or the required torque conditions. While the vehicle operates in the negative mode, the output power of the power generator is transmitted to the wheel side through the power dividing mechanism, and the power transmission efficiency of the vehicle deteriorates.

An embodiment of the present invention has been made in consideration of the circumstances described above. An object of the embodiment is to provide a vehicle with improved power transmission efficiency.

A vehicle according to an embodiment comprises an internal combustion engine; a power dividing mechanism configured to divide mechanical energy output from the internal combustion engine and output the divided mechanical energies; a power generator configured to convert the mechanical energy transmitted from the power dividing mechanism into electrical energy; a converter configured to control an operation of the power generator; an inverter connected with the converter through a direct-current link; a battery connected with the direct-current link; a motor configured to be driven with energy supplied from the inverter; a power coupling mechanism configured to couple mechanical energy supplied from the motor with the mechanical energy transmitted from the power dividing mechanism; an axle configured to be driven with the mechanical energy coupled with the power coupling mechanism; and a control unit configured to increase a rotation number of the internal combustion engine when a rotation direction of the power generator becomes a minus direction.

BRIEF DESCRIPTION OF DRAWINGS

FIG. 1 is a block diagram schematically illustrating a configuration of a vehicle according to a first embodiment.
FIG. 2 is a diagram schematically illustrating an example of a configuration of the power dividing mechanism.
FIG. 3 is a diagram for explaining an example of relation between rotation numbers of the sun gear, the ring gear, and the planetary carrier of the power dividing mechanism.
FIG. 4 is a diagram for explaining an example of relation of rotation numbers between the sun gear, the ring gear, and the planetary carrier of the power dividing mechanism.
FIG. 5 is a diagram illustrating an example of power generator frequency range in which a successive operation is possible in the vehicle of the embodiment.
FIG. 6 is a flowchart illustrating an example of a method for determining the rotation number of the internal combustion engine according to the first embodiment.

DETAILED DESCRIPTION

The following is an explanation of a vehicle of an embodiment with reference to drawings.

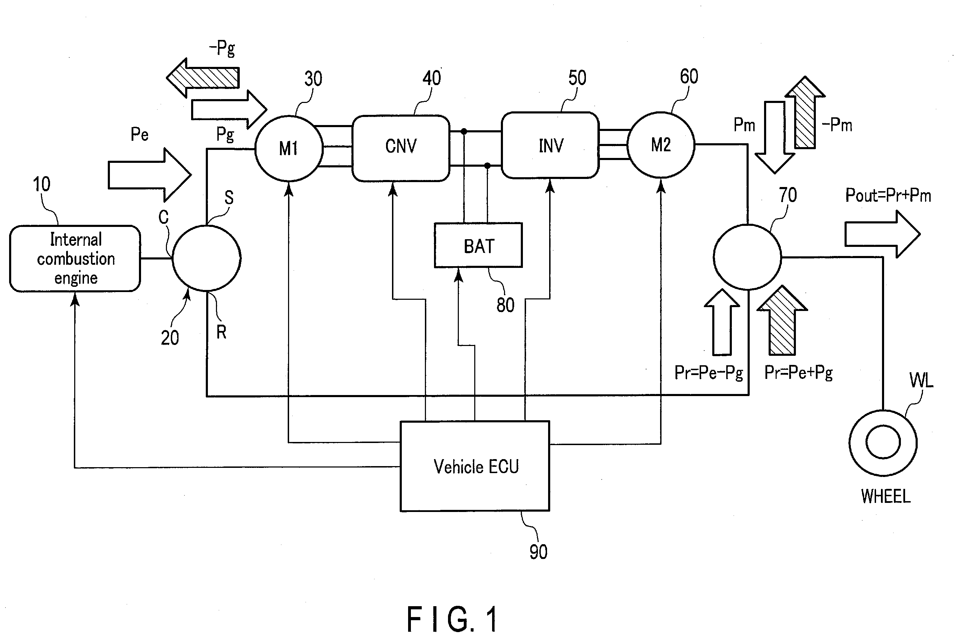

FIG. 1 is a block diagram schematically illustrating a configuration of a vehicle according to a first embodiment.

The vehicle according to the present embodiment includes an internal combustion engine 10, a power dividing mechanism 20, a power generator 30, a converter 40, an inverter 50, a motor 60, a power coupling mechanism 70, a battery 80, a wheel WL, and a vehicle ECU 90.

The internal combustion engine 10 is a prime mover generating mechanical energy driving the vehicle, such as a gasoline engine and a diesel engine.

The power dividing mechanism 20 divides the mechanical energy Pe generated in the internal combustion system 10 into energy Pg supplied to the power generator 30 side and energy Pr supplied to the wheel WL side (drive train side) and supplies the energies.

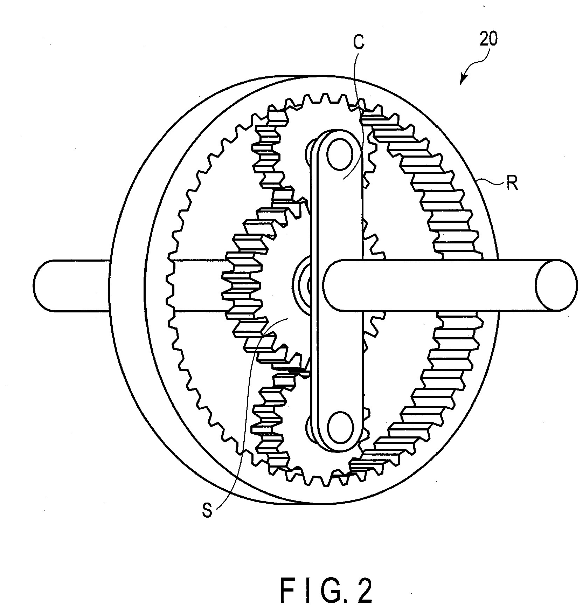

FIG. 2 is a diagram schematically illustrating an example of a configuration of the power dividing mechanism 20.

The power dividing mechanism 20 includes, for example, a sun gear S, planetary gears P circumscribed on the sun gear S, a ring gear R in which the planetary gears P are inscribed, and a planetary carrier C rotating along the orbit of the planetary gears P. In the present embodiment, the planetary carrier C is rotated by the mechanical energy Pe generated with the internal combustion engine 10. The rotation power of the sun gear S is transmitted to the power generator 30. The rotation power of the ring gear R is transmitted to the power coupling mechanism 70.

The power generator 30 converts the mechanical energy Pg supplied through the sun gear S of the power dividing mechanism 20 to electrical energy. The power generator 30 is, for example, a motor including a rotator moving in conjunction with the sun gear S and a stator, and outputs a three-phase alternating-current power.

The converter 40 is control means configured to control an operation of the power generator 30, and converts the three-phase alternating-current power output from the power generator 30 into a direct-current power to cause a regeneration operation and converts the direct-current power supplied from a direct-current link into a three-phase alternating-current power and supplies the converted power to the power generator 30 to cause the power generator 30 to perform a power-run operation. The converter 40 is connected with the inverter 50 and the battery 80 through the direct-current link.

The inverter 50 converts the direct-current power supplied from the direct-current link into an alternating-current power and outputs the converted power to the motor 60. The inverter 50 also converts the alternating-current power supplied from the motor 60 into a direct-current power and outputs the converted power to the direct-current link.

The motor 60 is driven with the alternating-current power supplied from the inverter 50, converts the electrical energy into a mechanical energy Pm, and outputs the converted energy to the power coupling mechanism 70.

The power coupling mechanism 70 transmits energy Pout obtained by coupling the mechanical energy Pg transmitted from the ring gear R of the internal combustion mechanism 10 with the mechanical energy Pm supplied from the inverter 50 to a wheel axle (not illustrated). The wheel WL is rotated and driven through the wheel axle.

The battery 80 includes, for example, a battery pack including a plurality of secondary battery cells, and is configured to be rechargeable with power supplied from the direct-current link and capable of discharging power through the direct-current link.

The vehicle ECU (electric control unit) 90 is a control unit configured to control the internal combustion engine 10, the power generator 30, the converter 40, the inverter 50, the motor 60, and the battery 80 to operate in conjunction with each other. The vehicle ECU 90 is, for example, computing means including at least one processor, such as a central processing unit (CPU) and a micro processing unit (MPU), and a memory storing a program to be executed with the processor.

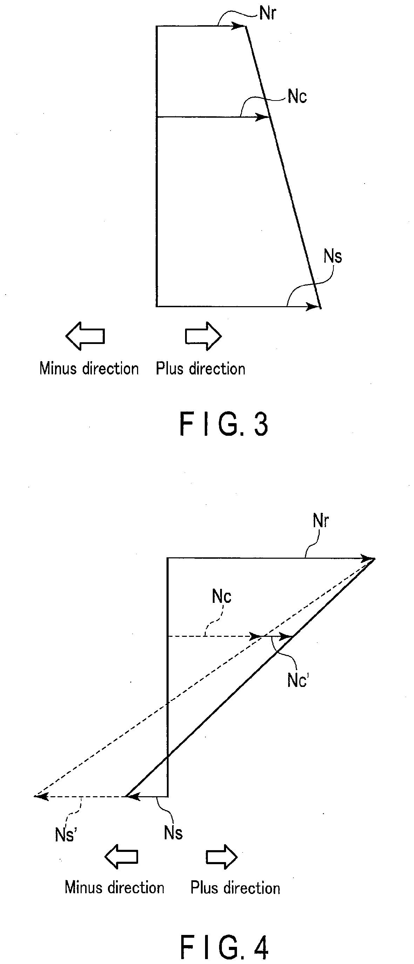

FIG. 3 is a diagram for explaining an example of relation between rotation numbers of the sun gear S, the ring gear R, and the planetary carrier C of the power dividing mechanism 20.

In FIG. 3, Nc is a rotation number of the planetary carrier C, Ns is a rotation number of the sun gear S, Nr is a rotation number of the ring gear R, Zs is the number of teeth of the sun gear S, and Zr is the number of teeth of the ring gear R. The plus (+) direction of the rotation number is rotation direction when the power generator 30 performs regeneration.

This example is an example of a positive mode (an operation mode of the vehicle in which all the energies are supplied in a direction going from the internal combustion engine 10 toward the wheel WL side) in which all the planetary carrier C, the sun gear S, and the ring gear R are rotated in the plus direction. The rotation number Nc of the planetary carrier C depends on the rotation number of the internal combustion engine 10, and the rotation number Nr of the ring gear R depends on the vehicle speed. The rotation number Ns of the sun gear S depends on the ratio of the number Zr of teeth of the sun gear S to the number Zr of teeth of the ring gear R.

In this state, when Tc is the torque generated with the planetary carrier C, Ts is the torque generated with the sun gear S, and Tr is the torque generated with the ring gear R, the torque Tc is equal to the sum of the torque Ts and the torque Tr, and the ratio between the torque Ts and the torque Tr depend on the ratio of the number Zr of teeth of the sun gear S and the number Zr of teeth of the ring gear R.

When the vehicle operates in the positive mode, the power generator 30 performs regeneration. The motor 60 outputs the mechanical energy Pm using the energy output from the power generator 30 to the direct-current link through the converter 40. By contrast, the energy Pr transmitted to the ring gear R of the power dividing mechanism 20 is directly transmitted to the wheel WL, and the mechanical energy Pout output with the vehicle is the sum of the energy Pm and the energy Pr.

When the vehicle speed increases, the rotation number of the ring gear R increases. In this state, when the rotation number (rotation number of the internal combustion engine 10) of the planetary carrier C is fixed, the rotation number of the sun gear S decreases, and may be changed to a minus direction. Specifically, the operation of the power generator 30 changes from regeneration to power running.

FIG. 4 is a diagram for explaining an example of relation of rotation numbers between the sun gear S, the ring gear R, and the planetary carrier C of the power dividing mechanism 20. This example is an example of the negative mode in which the planetary carrier C and the ring gear R rotate in the plus direction, and the sun gear S rotates in the minus direction.

For example, when the rotation number Nc of the planetary carrier C is fixed and the rotation number Nr of the ring gear R increases, the rotation number Ns of the sun gear S becomes negative. Specifically, the rotation direction of the sun gear S is reverse to that of the positive mode.

When the power dividing mechanism 20 operates in the negative mode, the mechanical energy Pr transmitted to the ring gear R is the sum of the mechanical energy Pe transmitted from the internal combustion engine 10 to the power dividing mechanism 20 and the mechanical energy Pg transmitted from the power generator 30 to the power dividing mechanism 20. The mechanical energy Pg is generated by a regeneration operation of the motor 60. For this reason, the mechanical energy Pg is transmitted to the wheel WL through the power dividing mechanism 20 and the power coupling mechanism 70, and the power transmission efficiency in the whole vehicle decreases.

For this reason, in the present embodiment, when the power dividing mechanism 20 operates in the negative mode, the vehicle ECU shifts the rotation number Nc of the planetary carrier C to the plus direction (increases the rotation number Nc), and decreases the absolute value of the rotation number Ns of the sun gear S to suppress the mechanical energy Pg to low energy. In this manner, the vehicle ECU improves the power transmission efficiency of the whole vehicle.

FIG. 4 illustrates the rotation number of the planetary carrier C in the negative mode in a broken line, and illustrates the rotation number Nc after being shifted to the plus direction with a solid line. With reference to the alignment chart, when the rotation number Nc of the planetary carrier C is shifted to the plus direction, the rotation number Ns of the sun gear S is also shifted to the plus direction and consequently the mechanical energy Pg transmitted from the power generator 30 to the power dividing mechanism 20 decreases.

The following is an explanation of the power transmission efficiency of the whole vehicle with an example in which the ratio of the number Zs of teeth of the sun gear S of the power dividing mechanism 20 to the number Zr of teeth of the ring gear R is 1:2, the energy transmission efficiency from the power generator 30 to the motor 60 is 85.6%, and the energy transmission efficiency of each of the power dividing mechanism 20 and the power coupling mechanism 70 is 98%.

In this state, when the output of the internal combustion engine 10 is fixed to 500 kW and the rotation number of the internal combustion engine 10 is increased from 1200 rpm to 1400 rpm, the rotation number (rotation number of the power generator 30) of the sun gear S is shifted from -800 rpm to -200 rpm, that is, shifted in the plus direction. In addition, as a result of increasing the rotation number of the internal combustion engine 10 with the output of the internal combustion engine 10 fixed, the torque (engine torque) of the planetary carrier C decreases, and the torque of the power generator 30 also decreases.

As a result of decrease in the rotation number and the torque of the power generator 30, the mechanical energy Pg output from the power generator 30 decreases, the energy regenerated in the motor 60 in the negative mode decreases, and the power transmission efficiency in the whole vehicle increases from 93.3% to 97%.

The following is an explanation of an example of a method for determining the rotation number of the internal combustion engine in the vehicle of the present embodiment.

When the power dividing mechanism 20 operates in the negative mode, to improve the power transmission efficiency of the vehicle, the rotation number of the internal combustion engine 10 is shifted (increased) in the plus direction. The shift quantity is limited with the converter 40 controlling the operation of the power generator 30.

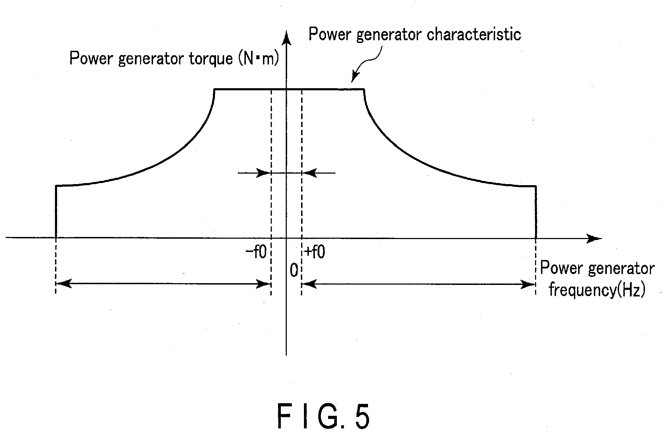

FIG. 5 is a diagram illustrating an example of power generator frequency range in which a successive operation is possible in the vehicle of the embodiment.

As the frequency of the power output from the power generator 30 more approaches to 0 Hz, the energization time of a specific element of the converter 40 increases. In addition, the frequency of the electrical power output from the power generator 30 becomes 0 Hz (direct current), a current continuously flows through the specific element, and the temperature of the element increases. To avoid this state, it is desirable to stipulate the range in which the power generator 30 performs continuous operation.

Suppose that Zs is the number of teeth of the sun gear S of the power dividing mechanism 20, Zr is the number of teeth of the ring gear R, Nr is the rotation number (rpm) of the ring gear R, Nc is the rotation number (rpm) of the planetary carrier C (internal combustion engine) before shift of the rotation number of the internal combustion engine 10, Nc' is the rotation number (rpm) of the planetary carrier C (internal combustion engine) after shift of the rotation number of the internal combustion engine 10, Ns is the rotation number (rpm) of the sun gear S before shift of the rotation number of the internal combustion engine 10, Ns' is the rotation number (rpm) of the sun gear S after shift of the rotation number of the internal combustion engine 10, the frequency range in which continuous operation of the converter 40 is impossible is larger than -f0 (Hz) and smaller than f0 (Hz), and Pn is the number of pole pairs.

When the rotation number of the ring gear R does not change before and after shift of the rotation number, relation between Nc, Nc', Nr, Ns, and Ns' is expressed with Expression 1 and Expression 2 as follows.

[Numerical Expression 1]

$$Nc = \frac{ZrNr + ZsNs}{ZsZr} \quad \text{(Expression 1)}$$

$$Nc' = \frac{ZrNr + ZsNs\prime}{ZsZr} \quad \text{(Expression 2)}$$

The rotation number Ns' of the power generator 30 after shift (when the frequency of the power generator 30 is -f0) of the rotation number of the internal combustion engine 10 is expressed with Expression 3 as follows. When Ns' is substituted into Expression 3 described above, the rotation number Nc' of the internal combustion engine 10 after shift is expressed as Expression 4 as follows. Specifically, the rotation number Nc' expressed with Expression 4 as follows is the rotation number of the internal combustion engine 10 corresponding to the lower limit value (=-f0) of the frequency range in which continuous operation of the power generator 30 is impossible.

[Numerical Expression 2]

$$Ns' = \frac{f0}{Pn} \times 2\pi \quad \text{(Expression 3)}$$

$$Nc' = \frac{ZrNr + Zs\frac{f0 \times 2\pi}{Pn}}{ZsZr} \quad \text{(Expression 4)}$$

Because the shift quantity of the rotation number of the internal combustion engine 10 is "Nc'-Nc", the upper limit of the shift quantity when the vehicle operates in the negative mode is expressed with Expression 5.

[Numerical Expression 3]

$$Nc' - Nc = \frac{Zs(\frac{f0}{Pn} \times 2\pi - Ns)}{ZsZr} \quad \text{(Expression5)}$$

As described above, by determining the upper limit of the shift quantity of the rotation number of the internal combustion engine 10, stable vehicle drive is achieved while the power transmission efficiency of the whole vehicle is enhanced.

In addition, generally, the operating point (output power Pe and rotation number Nc) of the internal combustion engine 10 is determined such that the efficiency of the internal combustion engine 10 alone becomes maximum. However, as described above, the influence of decrease in power transmission efficiency at the time when the power dividing mechanism 20 operates in the negative mode cannot be ignored, and the fuel efficiency of the whole vehicle does not always become optimum even when the efficiency of the internal combustion engine 10 alone is optimum. As described above, to improve the power transmission efficiency from the internal combustion engine 10 to the wheel WL, it is effective to shift the rotation number Nc of the internal combustion engine 10, but the efficiency of the internal combustion engine 10 alone decreases.

For this reason, in the present embodiment, the operating point of the internal combustion engine 10, at which the fuel efficiency of the vehicle becomes optimum, is searched on the basis of a trade-off relation between the power transmission efficiency from the internal combustion engine 10 to the wheel WL and the efficiency of the internal combustion engine 10.

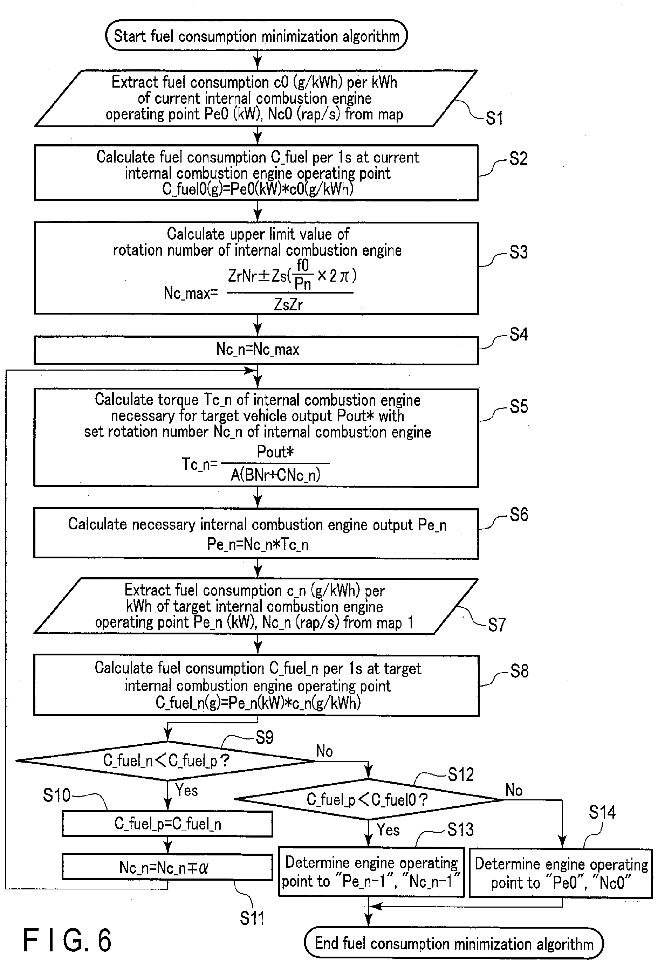

FIG. 6 is a flowchart illustrating an example of a method for determining the rotation number of the internal combustion engine according to the first embodiment. The vehicle ECU 90 executes the following method for determining the rotation number of the internal combustion engine at least when the vehicle operates in the negative mode. The vehicle ECU 90 determines that the vehicle operates in the negative mode, when the rotation direction of the power generator 30 is minus.

First, the vehicle ECU 90 calculates fuel consumption C_fuel0 (g) at an optimum operating point (output power Pe0, rotation number Nc0) for the internal combustion engine 10 alone. The vehicle ECU 90 reads a fuel consumption c0 (g/kWh) per unit energy corresponding to the rotation number Nc0 (rap/s) and the output power Pe0 (kW) of the internal combustion engine 10 from a map recorded in advance in the memory of the vehicle ECU 90 (Step S1).

The vehicle ECU 90 calculates fuel consumption C_fuel0 (g) per unit time using the fuel consumption c0 (g/kWh) read from the memory, as in Expression 6 as follows (Step S2) .

[Numerical Expression 4]

$$C\_fuel0 = Pe0 \times c0 \quad \text{(Expression 6)}$$

Thereafter, the vehicle ECU 90 calculates the upper limit Nc_max of the rotation number of the internal combustion engine 10. The upper limit Nc_max of the rotation number of the internal combustion engine 10 is calculated with Expression 4 described above (Step S3).

Expression 4 described above indicates the upper limit value Nc_max of the rotation number of the internal combustion engine 10 in operation in the negative mode. In operation in the positive mode, the rotation number Nc_max of the internal combustion engine 10 is set to the value (lower limit value of the rotation number of the internal combustion engine 10 in the positive mode) obtained by reversing the sign of f0 of Expression 4.

Thereafter, the vehicle ECU 90 sets the rotation number Nc_n of the internal combustion engine 10 to the upper limit Nc_max of the rotation number (Step S4), and calculates the internal combustion engine torque Tc_n necessary for outputting the required vehicle output Pout* using Expression 7 as follows (Step S5).

[Numerical Expression 5]

$$Tc\_n = \frac{Pout *}{A(BNr + CNc\_n)} \quad \text{(Expression 7)}$$

$$A = \frac{1}{Zs + Zr}$$

$$B = Zr(\eta\,gr - \frac{1}{\eta\,el\,\eta\,gr})$$

$$C = \frac{(Zs + Zr)}{\eta\,el\,\eta\,gr}$$

In Expression 7 described above, Zs is the number of teeth of the sun gear, Zr is the number of teeth of the ring gear, ηgr is the gear efficiency (power transmission efficiency of each of power dividing mechanism 20 and power coupling mechanism 70).

Thereafter, the vehicle ECU 90 calculates the internal combustion output Pe_n necessary for outputting required vehicle output Pout* at the operating point of the internal combustion engine 10 using the internal combustion engine torque Tc_n and the rotation number Nc_n of the internal combustion engine 10, as in Expression 8 (Step S6).

[Numerical Expression 6]

$$Pe\_n = \mathrm{Nc\_nTc\_n} \quad \text{(Expression 8)}$$

Thereafter, the vehicle ECU 90 extracts the fuel consumption c_n (g/kWh) per unit energy at the operating point (Pe_n, Nc_n) of the internal combustion engine 10 from the map stored in the memory (Step S7), and calculates the fuel consumption C_fuel_n per unit time with Expression 9 as follows (Step S8).
[Numerical Expression 7]

$$C\_fuel\_n = \mathrm{Pe\_n} * \mathrm{c\_n} \quad \text{(Expression 9)}$$

The vehicle ECU 90 compares the fuel consumption C_fuel_n calculated at Step S8 with a searching variable C_fuel_p of the fuel consumption (Step S9). The initial value of the searching variable C_fuel_p is the fuel consumption C_fuel0.

When the fuel consumption C_fuel_n is smaller than the searching variable C_fuel_p, the vehicle ECU 90 stores the value of the fuel consumption C_fuel_n calculated at Step S8 in the searching variable C_fuel_p (Step S10).

Thereafter, the vehicle ECU 90 updates the rotation number Nc n of the internal combustion engine 10 to Nc_n-$\alpha$ (Step S11). The vehicle ECU 90 sets the value of $\alpha$ to a positive integer. In operation in the positive mode, the rotation number Nc_n is set to Nc_n+$\alpha$. The value of $\alpha$ may be a fixed value or, for example, a value changing in accordance with the value of the rotation number Nc_n.

Thereafter, the vehicle ECU 90 returns to Step S5, performs arithmetic operations from Step S5 to Step S8, calculates the fuel consumption C_fuel_n using the updated rotation number Nc_n (Step S8), compares the searching variable C_fuel_p of the fuel consumption with the fuel consumption C_fuel_n (Step S9), and repeats an operation of updating the searching variable C_fuel_p to a value smaller than the previous value until "C_fuel_n≥C_fuel_p" is satisfied.

At Step S9, when the fuel consumption C_fuel_n is equal to or larger than searching variable C_fuel_p of the fuel consumption (when C_fuel_n is not smaller than C_fuel_p), the vehicle ECU 90 compares the searching variable C_fuel_p of the fuel consumption with the fuel consumption C_fuel0 (Step S12).

When the searching variable C_fuel_p of the fuel consumption is smaller than the initial value C_fuel0, the vehicle ECU 90 sets the operating point (Pe_n-1, Nc_n-1) at the searching variable C_fuel_p of the fuel consumption as the operating point of the internal combustion engine 10 (Step S13).

When the searching variable C_fuel_p of the fuel consumption is equal to or larger than the initial value C_fuel0, the vehicle ECU 90 sets the initial operating point (Pe0, Nc0) as the operating point of the internal combustion engine 10 (Step S14).

Specifically, in the present embodiment, the vehicle ECU 90 includes computing means configured to set the fuel consumption C_fuel0 per unit time at the optimum operating point of the internal combustion engine 10 as the initial value of the fuel consumption C_fuel_n, calculate the upper limit value Nc max of the rotation number of the internal combustion engine 10, calculate the torque and the output power of the internal combustion engine 10 necessary for achieving the target vehicle output at the upper limit value Nc_max of the rotation number, calculate the fuel consumption C_fuel_n per unit time with the torque and the output power of the internal combustion engine 10, set the initial value C_fuel0 of the fuel consumption as the initial value of the searching variable C_fuel_p, change the rotation number of the internal combustion engine 10 and update the searching variable C_fuel_p to the value of the fuel consumption C_fuel_n until the fuel consumption C_fuel_n becomes equal to or larger than the searching variable C_fuel_p, compare the searching variable C_fuel_p with the initial value C_fuel0 of the fuel consumption when the fuel consumption C_fuel_n per unit time becomes larger than the searching variable C_fuel_p, and set the rotation number of the internal combustion engine 10 corresponding to the searching variable C_fuel_p as the operating point when the searching variable C_fuel_p is smaller than the initial value C_fuel0 of the fuel consumption.

Determining the rotation number of the internal combustion engine 10 as described above enables determination of the operating point of the internal combustion engine 10 that improves the power transmission efficiency of the whole vehicle and minimizes the fuel consumption. Specifically, the present embodiment provides a vehicle with improved power transmission efficiency.

Some embodiments of the present invention described above are presented as examples, and not intended to restricting the scope of the invention. These novel embodiments may be carried out in other various forms, and various omissions, replacement, and changes are possible within the range not departing from the gist of the invention. These embodiments and modifications thereof are included in the scope and the gist of the invention, and included in the inventions described in the claims and the range equivalent to them.

For example, when the rotation number Nc of the internal combustion engine 10 is determined, the vehicle ECU 90 may select a plurality of rotation numbers Nc_n in the range in which the continuous operation of the internal combustion engine 10 is possible, at a predetermined sampling frequency, calculate the fuel consumptions at the respective selected rotation numbers Nc_n, and determine the rotation number Nc_n with the smallest fuel consumption and the output power Pe_n corresponding thereto as the operating point 8(Pe, Nc). This case also produces the effect similar to that of the embodiment described above.

The method for determining the rotation number of the internal combustion engine 10 described above can be performed both when the vehicle operates in the positive mode and when the vehicle operates in the negative mode. In particular, the power transmission efficiency is improved and the fuel consumption is suppressed more effectively, by determining the rotation number in consideration of the fuel consumption of the internal combustion engine 10 and the transmission efficiency of the energy when the vehicle operates in the negative mode.

**Claims**

1. A vehicle comprising:

    an internal combustion engine;
    a power dividing mechanism configured to divide mechanical energy output from the internal combustion engine and output the divided mechanical energies;
    a power generator configured to convert the mechanical energy transmitted from the power dividing mechanism into electrical energy;
    a converter configured to control an operation of the power generator;
    an inverter connected with the converter through a direct-current link;
    a battery connected with the direct-current link;
    a motor configured to be driven with energy supplied from the inverter;
    a power coupling mechanism configured to couple mechanical energy supplied from the motor with the mechanical energy transmitted from the power dividing mechanism;
    an axle configured to be driven with the mechanical energy coupled with the power coupling mechanism; and
    a control unit configured to increase a rotation number of the internal combustion engine when a rotation direction of the power generator becomes a minus direction.

2. The vehicle according to claim 1, wherein the control unit includes computing means configured to:

    set fuel consumption per unit time at an optimum operating point of the internal combustion engine as an initial value of the fuel consumption;
    calculate an upper limit value of the rotation number of the internal combustion engine;
    calculate a torque and output power of the internal combustion engine necessary for achieving a target vehicle output at the upper limit value of the rotation number;
    calculate fuel consumption per unit time with the torque and the output power of the internal combustion engine;
    set the initial value of the fuel consumption as an initial value of a searching variable, change the rotation number of the internal combustion engine, and update the searching variable to a value of the fuel consumption per unit time until the fuel consumption per unit time becomes larger than the searching variable; and
    compare the searching variable with the initial value of the fuel consumption when the fuel consumption per unit time becomes larger than the searching variable of the fuel consumption, and set the rotation number of the internal combustion engine corresponding to the searching variable as an operating point when the searching variable is smaller than the initial value of the fuel consumption.

**Amended claims under Art. 19.1 PCT**

1. A vehicle comprising:

    an internal combustion engine;
    a power dividing mechanism configured to divide mechanical energy output from the internal combustion engine and output the divided mechanical energies;
    a power generator configured to convert the mechanical energy transmitted from the power dividing mechanism into electrical energy;
    a converter configured to control an operation of the power generator;
    an inverter connected with the converter through a direct-current link;

a battery connected with the direct-current link;

a motor configured to be driven with energy supplied from the inverter;

a power coupling mechanism configured to couple mechanical energy supplied from the motor with the mechanical energy transmitted from the power dividing mechanism;

an axle configured to be driven with the mechanical energy coupled with the power coupling mechanism; and

a control unit configured to increase a rotation number of the internal combustion engine when a rotation direction of the power generator becomes a minus direction, wherein the control unit includes computing means configured to:

set fuel consumption per unit time at an optimum operating point of the internal combustion engine as an initial value of the fuel consumption;

calculate an upper limit value of the rotation number of the internal combustion engine;

calculate a torque and output power of the internal combustion engine necessary for achieving a target vehicle output at the upper limit value of the rotation number;

calculate fuel consumption per unit time with the torque and the output power of the internal combustion engine;

set the initial value of the fuel consumption as an initial value of a searching variable, change the rotation number of the internal combustion engine, and update the searching variable to a value of the fuel consumption per unit time until the fuel consumption per unit time becomes larger than the searching variable; and

compare the searching variable with the initial value of the fuel consumption when the fuel consumption per unit time becomes larger than the searching variable of the fuel consumption, and set the rotation number of the internal combustion engine corresponding to the searching variable as an operating point when the searching variable is smaller than the initial value of the fuel consumption.

F I G. 1

FIG. 2

Minus direction    Plus direction

FIG. 3

Minus direction    Plus direction

FIG. 4

Power generator torque (N·m)

Power generator characteristic

−f0

+f0

0

Power generator
frequency(Hz)

F I G. 5

13

$$\text{Start fuel consumption minimization algorithm}$$

Extract fuel consumption c0 (g/kWh) per kWh
of current internal combustion engine
operating point Pe0 (kW), Nc0 (rap/s) from map —S1

Calculate fuel consumption C_fuel per 1s at current
internal combustion engine operating point
C_fuel0(g)=Pe0(kW)*c0(g/kWh) —S2

Calculate upper limit value of
rotation number of internal combustion engine

$$Nc\_max = \frac{ZrNr \pm Zs(\frac{f0}{Pn} \times 2\pi)}{ZsZr}$$

—S3

Nc_n=Nc_max —S4

Calculate torque Tc_n of internal combustion engine
necessary for target vehicle output Pout* with
set rotation number Nc_n of internal combustion engine

$$Tc\_n = \frac{Pout*}{A(BNr+CNc\_n)}$$

—S5

Calculate necessary internal combustion engine output Pe_n
Pe_n=Nc_n*Tc_n —S6

Extract fuel consumption c_n (g/kWh) per
kWh of target internal combustion engine
operating point Pe_n (kW), Nc_n (rap/s) from map 1 —S7

Calculate fuel consumption C_fuel_n per 1s at target
internal combustion engine operating point
C_fuel_n(g)=Pe_n(kW)*c_n(g/kWh) —S8

—S9
C_fuel_n＜C_fuel_p ?  — No

Yes

S10 — C_fuel_p=C_fuel_n

Nc_n=Nc_n∓α

S11

—S12
C_fuel_p＜C_fuel0 ? — No

Yes —S13

Determine engine operating
point to "Pe_n-1", "Nc_n-1"

S14
Determine engine operating
point to "Pe0", "Nc0"

F I G. 6

$$\text{End fuel consumption minimization algorithm}$$

# EP 3 712 026 A1

<table>
<tr><td colspan="2" align="center"><b>INTERNATIONAL SEARCH REPORT</b></td><td colspan="2">International application No.<br>PCT/JP2017/041105</td></tr>
</table>

**A. CLASSIFICATION OF SUBJECT MATTER**

Int. Cl. B60W10/06(2006.01)i, B60K6/445(2007.10)i, B60W20/00(2016.01)i

According to International Patent Classification (IPC) or to both national classification and IPC

**B. FIELDS SEARCHED**

Minimum documentation searched (classification system followed by classification symbols)

Int. Cl. B60W10/06, B60K6/445, B60W20/00

Documentation searched other than minimum documentation to the extent that such documents are included in the fields searched

Published examined utility model applications of Japan    1922-1996
Published unexamined utility model applications of Japan    1971-2018
Registered utility model specifications of Japan    1996-2018
Published registered utility model applications of Japan    1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2016-88197 A (TOYOTA MOTOR CORP.) 23 May 2016, paragraphs [0019]-[0025], [0061]-[0070], fig. 1, 7, 8 & US 2016/0121707 A1, paragraphs [0031]-[0037], [0073]-[0082], fig. 1, 7, 8 & EP 3015744 A1 | 1<br>2 |
| A | JP 2011-251615 A (TOYOTA MOTOR CORP.) 15 December 2011, paragraphs [0021], [0022] (Family: none) | 1 |
| A | JP 2013-2286 A (TOYOTA CENTRAL RESEARCH AND DEVELOPMENT LABORATORIES, INC.) 07 January 2013, paragraphs [0020]-[0046] (Family: none) | 2 |

☒ Further documents are listed in the continuation of Box C.　　☐ See patent family annex.

| | |
|---|---|
| *　Special categories of cited documents:<br>"A"　document defining the general state of the art which is not considered to be of particular relevance<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search<br>23.01.2018 | Date of mailing of the international search report<br>06.02.2018 |
|---|---|
| Name and mailing address of the ISA/<br>　Japan Patent Office<br>　3-4-3, Kasumigaseki, Chiyoda-ku,<br>　Tokyo 100-8915, Japan | Authorized officer<br><br>Telephone No. |

Form PCT/ISA/210 (second sheet) (January 2015)

15

**INTERNATIONAL SEARCH REPORT**

International application No.

PCT/JP2017/041105

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2000-32608 A (DENSO CORP.) 28 January 2000, paragraphs [0029]-[0040] & US 6173574 B1, column 4, line 65 to column 7, line 25 & EP 09970838 A2 | 2 |
| E, X | JP 2017-226302 A (TOSHIBA CORP.) 28 December 2017, claims 1-2, paragraphs [0009]-[0055] (Family: none) | 1-2 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010083220 A